# EUROPEAN PATENT APPLICATION

(11) **EP 4 152 158 A1**
(43) Date of publication of application: **22.03.2023**
(21) Application number: 21816924.1
(22) Date of filing: 02.06.2021
(51) Int. Cl.: G06F 11/00

(54) **METHOD FOR PROCESSING ROUTING MESSAGE, COMMUNICATION DEVICE, STORAGE MEDIUM, AND SYSTEM**

(30) Priority: 04.06.2020 CN 202010500275
(71) Applicant: Huawei Technologies Co., Ltd., Longgang District, Shenzhen, Guangdong 518129 (CN)
(72) Inventor: XU, Jianbin, Shenzhen, Guangdong 518129 (CN); GUO, Feng, Shenzhen, Guangdong 518129 (CN); ZHANG, Xudong, Shenzhen, Guangdong 518129 (CN); XU, Haijun, Shenzhen, Guangdong 518129 (CN); ZHAO, Hua, Shenzhen, Guangdong 518129 (CN)
(74) Representative: Körber, Martin Hans
(86) International application number: PCT/CN2021/098013
(87) International publication number: WO 2021/244588

(57) **Abstract**

A routing packet processing method, a communication device, a storage medium, and a system are provided, and belong to the field of communication technologies. Data is synchronized in a form of packets between routing processing units. Because the format of the packets is standard and unified, after the data is synchronized in the form of the packets, even if data formats supported by the routing processing units are incompatible, or a routing processing unit does not have a capability of receiving and sending specific data, corresponding modification is not made on the routing processing unit, and synchronization of routing data does not fail. That is, the synchronization of the data in the form of the packets can ensure compatibility of supporting a plurality of data formats by the routing processing units. In addition, when a routing packet carries a new attribute, the routing processing unit can receive the routing packet without modification. This relatively reduces a large amount of modification work.

## Description

This application claims priority to Chinese Patent Application No. 202010500275.7, filed on June 4, 2020 and entitled "ROUTING PACKET PROCESSING METHOD, COMMUNICATION DEVICE, STORAGE MEDIUM, AND SYSTEM", which is incorporated herein by reference in its entirety.

### TECHNICAL FIELD

Embodiments of this application relate to the field of communication technologies, and in particular, to a routing packet processing method, a communication device, a storage medium, and a system.

### BACKGROUND

Aborder gateway protocol (Border gateway protocol, BGP) non-stop routing (Non-Stop Routing, NSR) technology can ensure that a BGP peer connection and a BGP route are uninterrupted when a device is faulty, to improve system reliability. During specific implementation, the system reliability is improved at a hardware layer or a software layer. For example, the system reliability is improved at the software layer. In a conventional system architecture, two routing units: an active routing unit and a standby routing unit are deployed. When the active routing unit is faulty, the standby routing unit can take over a task of the active routing unit. The two routing units can implement a BGP routing processing function, and the active routing unit can further synchronize related data of the active routing unit to the standby routing unit.

During specific implementation, after perceiving that the standby routing unit goes online, the active routing unit needs to actively synchronize data such as BGP peer information, a routing information base input (Route information base Input, RibIn), a routing information base output (Route information base Output, RibOut), and a routing attribute to the standby routing unit. Once the active routing unit is faulty, the standby routing unit can take over the task of the active routing unit based on the synchronized data. However, when data formats supported by the active routing unit and the standby routing unit are incompatible, or the routing unit does not have a capability of receiving and sending specific data, data synchronization fails. As a result, the standby routing unit cannot take over the task of the active routing unit.

### SUMMARY

Embodiments of this application provide a routing packet processing method, a communication device, a storage medium, and a system. Synchronization of routing data in a form of packets can ensure compatibility of supporting a plurality of data formats by routing processing units. The technical solutions are as follows:

According to a first aspect, a routing packet processing method is provided. In the method, a standby routing fault-tolerance unit obtains a plurality of inbound routing packets of a first routing processing unit by using a forwarding unit and an active database unit, where the first routing processing unit is a routing processing unit corresponding to an active routing fault-tolerance unit; and the standby routing fault-tolerance unit sends the plurality of inbound routing packets of the first routing processing unit to a second routing processing unit, where the second routing processing unit is a routing processing unit corresponding to the standby routing fault-tolerance unit.

Because the second routing processing unit can obtain routing information received by the first routing processing unit, after the routing fault-tolerance unit corresponding to the second routing processing unit is switched to the active routing fault-tolerance unit, a forwarding table in the forwarding unit remains correct, or remains correct to a large extent.

In addition, in this embodiment of this application, data is synchronized in a form of the packets between the routing processing units. Because the format of the packets is standard and unified, after the data is synchronized in the form of the packets, even if data formats supported by the routing processing units are incompatible, or a routing processing unit does not have a capability of receiving and sending specific data, corresponding modification is not made on the routing processing unit, and synchronization of routing data does not fail. That is, the synchronization of the routing data in the form of the packets can ensure compatibility of supporting a plurality of data formats by the routing processing units. In addition, when an inbound routing packet carries a new attribute, the routing processing unit can receive the inbound routing packet without modification. This relatively reduces a large amount of modification work.

In this embodiment of this application, online time points of the deployed routing processing units may be different. Therefore, for other online routing processing units than the first routing processing unit, routing fault-tolerance units corresponding to these routing processing units are standby routing fault-tolerance units, and these standby routing fault-tolerance units can read related data of the first routing processing unit from the active database unit. In addition, after receiving the inbound routing packets, the forwarding unit further needs to send the inbound routing packets to these standby routing fault-tolerance units. In this way, these standby routing fault-tolerance units can not only receive the inbound routing packets sent by the forwarding unit, but also read the inbound routing packets from the active database unit. However, there are a plurality of implementations in which packets are obtained by the standby routing fault-tolerance unit. Two of the implementations are described below.

Manner 1: The standby routing fault-tolerance unit receives the inbound routing packets from the forwarding unit. If the standby routing fault-tolerance unit is not in a real-time protection state, the standby routing fault-tolerance unit discards the inbound routing packets from the forwarding unit, but reads the plurality of inbound routing packets of the first routing processing unit from the active database unit. If the standby routing fault-tolerance unit is already in the real-time protection state, the standby routing fault-tolerance unit obtains the plurality of inbound routing packets of the first routing processing unit by using the forwarding unit.

That is, in Manner 1, before the standby routing fault-tolerance unit enters the real-time protection state, the standby routing fault-tolerance unit discards the inbound routing packets from the forwarding unit, but reads the inbound routing packets from the active database unit. After the standby routing fault-tolerance unit enters the real-time protection state, the standby routing fault-tolerance unit does not read the inbound routing packets from the active database unit any more, but obtains the inbound routing packets from the forwarding unit.

The real-time protection state is a state in which the routing processing unit corresponding to the standby routing fault-tolerance unit can take over work of the routing processing unit corresponding to the active routing fault-tolerance unit. To be specific, when the routing processing unit corresponding to the active routing fault-tolerance unit is faulty, or the active routing fault-tolerance unit is faulty, a leader election service (leader election service, LES) can elect a routing fault-tolerance unit from the standby routing fault-tolerance units in the real-time protection state as an active routing fault-tolerance unit, and a routing processing unit corresponding to the re-elected active routing fault-tolerance unit can establish a routing peer connection with a routing node, and receive and send a BGP route, so that the BGP peer connection and the BGP route are uninterrupted. This may also be understood as that, a quantity of the inbound routing packets read by the standby routing fault-tolerance unit in the real-time protection state from the active database unit is the same as a quantity of the inbound routing packets received by the standby routing fault-tolerance unit from the forwarding unit. This ensures final consistency between the routing processing unit corresponding to the active routing fault-tolerance unit and the routing processing unit corresponding to the standby routing fault-tolerance unit.

Manner 2: The standby routing fault-tolerance unit receives the inbound routing packets from the forwarding unit, and also reads the inbound routing packets of the first routing processing unit from the active database unit. When a last inbound routing packet read from the active database unit is the same as or adjacent to one inbound routing packet from the forwarding unit, the standby routing fault-tolerance unit stops reading the inbound routing packets from the active database unit.

That is, in Manner 2, whether the standby routing fault-tolerance unit is in the real-time protection state does not need to be determined, but the inbound routing packets are obtained from both the forwarding unit and the active database unit. When the last inbound routing packet obtained from the active database unit is the same as or adjacent to the inbound routing packet obtained from the forwarding unit, it indicates that a quantity of the inbound routing packets obtained by the standby routing fault-tolerance unit from the active database unit is the same as a quantity of the inbound routing packets obtained by the standby routing fault-tolerance unit from the forwarding unit. In this way, subsequently, the inbound routing packets from the forwarding unit can be directly received, and the inbound routing packets do not need to be obtained from the active database unit. This can ensure final consistency between the routing processing unit corresponding to the active routing fault-tolerance unit and the routing processing unit corresponding to the standby routing fault-tolerance unit.

It should be noted that the inbound routing packet may carry one packet number. In this way, whether the last inbound routing packet read by the standby routing fault-tolerance unit from the active database unit is the same as or adjacent to the inbound routing packet from the forwarding unit can be determined by using the packet number in the inbound routing packet.

Optionally, in some embodiments, the standby routing fault-tolerance unit can further send the plurality of inbound routing packets of the first routing processing unit to a standby database unit, and the standby database unit stores the plurality of inbound routing packets of the first routing processing unit. In this way, after the standby routing fault-tolerance unit is elected as the new active routing fault-tolerance unit, other online standby routing fault-tolerance units may further obtain the inbound routing packets from the standby database unit.

In this embodiment of this application, the inbound routing packets may be processed, outbound routing packets may also be processed. For the outbound routing packets, the standby routing fault-tolerance unit obtains a plurality of outbound routing packets of the second routing processing unit. The standby routing fault-tolerance unit obtains a plurality of outbound routing packets of the first routing processing unit by using the forwarding unit and the active database unit. The standby routing fault-tolerance unit determines routing update information based on the plurality of outbound routing packets of the second routing processing unit and the plurality of outbound routing packets of the first routing processing unit. After the standby routing fault-tolerance unit is switched to the new active routing fault-tolerance unit, the new active routing fault-tolerance unit sends the routing update information to a third routing processing unit. The third routing processing unit is a routing processing unit corresponding to a standby routing fault-tolerance unit other than the new active routing fault-tolerance unit.

In this embodiment of this application, data is synchronized in a form of the packets between the routing processing units. Because the form of the packets is standard and unified, after the data is synchronized in the form of the packets, even if data formats supported by the routing processing units are incompatible, or a routing processing unit does not have a capability of receiving and sending specific data, synchronization of routing data does not fail. That is, the synchronization of the routing data in the form of the packets can ensure compatibility of supporting a plurality of data formats by the routing processing units. In addition, when an outbound routing packet carries a new attribute, the routing processing unit can receive the outbound routing packet without modification. This relatively reduces a large amount of modification work. In addition, after obtaining routing information sent by the first routing processing unit, the second routing processing unit may further compare the routing information sent by the first routing processing unit with routing information that the second routing processing unit intends to send, to determine the routing update information. In this way, after the routing fault-tolerance unit corresponding to the second routing processing unit is switched to the active routing fault-tolerance unit, routing information that is previously released by the first routing processing unit and is incorrect for the second routing processing unit can be modified. This avoids the incorrect routing information in a network.

Based on the foregoing descriptions, in this embodiment of this application, the routing processing units do not have an active/standby relationship. Therefore, each routing processing unit may send the outbound routing packets to the corresponding routing fault-tolerance unit. However, the routing fault-tolerance units have an active/standby relationship, and a peer relationship is established between the first routing processing unit and the routing node. Therefore, the active routing fault-tolerance unit can send, to the routing node by using the forwarding unit, the outbound routing packets sent by the first routing processing unit, but the standby routing fault-tolerance unit cannot send, to the routing node by using the forwarding unit, the outbound routing packets sent by the second routing processing unit, but can only locally store the outbound routing packets sent by the second routing processing unit.

In this way, subsequently, when the first routing processing unit or the active routing fault-tolerance unit is faulty, if a standby routing fault-tolerance unit is elected as a new active routing fault-tolerance unit, to ensure that a routing processing unit corresponding to the new active routing fault-tolerance unit can successfully take over a task of the original first routing processing unit, the new active routing fault-tolerance unit compares the plurality of outbound routing packets of the second routing processing unit with the plurality of outbound routing packets of the first routing processing unit. If there is a difference between the plurality of outbound routing packets of the second routing processing unit and the plurality of outbound routing packets of the first routing processing unit, the new active routing fault-tolerance unit may determine routing update information based on the plurality of outbound routing packets of the second routing processing unit and the plurality of outbound routing packets of the first routing processing unit.

The routing update information may include a route that needs to be updated, which may also be referred to as a route that needs to be modified, and may further include a route that needs to be withdrawn.

It should be noted that the standby routing fault-tolerance unit may determine the foregoing routing update information before being switched to the new active routing fault-tolerance unit, or may determine the foregoing routing update information after being switched to the new active routing fault-tolerance unit. An occasion for determining the routing update information is not limited in this embodiment of this application. In the latter case, the standby routing fault-tolerance unit is actually the new active routing fault-tolerance unit.

In this embodiment of this application, online time points of the deployed routing processing units may be different. Therefore, for other online routing processing units than the first routing processing unit, routing fault-tolerance units corresponding to these routing processing units are standby routing fault-tolerance units, and these standby routing fault-tolerance units can read related data of the first routing processing unit from the active database unit. In addition, after receiving the outbound routing packets, the forwarding unit further needs to send the outbound routing packets to these standby routing fault-tolerance units. In this way, these standby routing fault-tolerance units can not only receive the outbound routing packets sent by the forwarding unit, but also read the outbound routing packets from the active database unit. However, there are a plurality of implementations in which packets are obtained by the standby routing fault-tolerance unit. Two of the implementations are described below.

Manner 1: The standby routing fault-tolerance unit receives the outbound routing packets from the forwarding unit. If the standby routing fault-tolerance unit is not in a real-time protection state, the standby routing fault-tolerance unit discards the outbound routing packets from the forwarding unit, but reads the outbound routing packets of the first routing processing unit from the active database unit. If the standby routing fault-tolerance unit is already in the real-time protection state, the standby routing fault-tolerance unit obtains the plurality of outbound routing packets of the first routing processing unit by using the forwarding unit.

That is, in Manner 1, before the standby routing fault-tolerance unit enters the real-time protection state, the standby routing fault-tolerance unit discards the outbound routing packets from the forwarding unit, but reads the outbound routing packets from the active database unit. After the standby routing fault-tolerance unit enters the real-time protection state, the standby routing fault-tolerance unit does not read the outbound routing packets from the active database unit any more, but obtains the outbound routing packets from the forwarding unit.

Manner 2: The standby routing fault-tolerance unit receives the outbound routing packets from the forwarding unit, and also reads the outbound routing packets of the first routing processing unit from the active database unit. When a last outbound routing packet read from the active database unit is the same as or adjacent to one outbound routing packet from the forwarding unit, the standby routing fault-tolerance unit stops reading the outbound routing packets from the active database unit.

That is, in Manner 2, whether the standby routing fault-tolerance unit is in the real-time protection state does not need to be determined, but the outbound routing packets are obtained from both the forwarding unit and the active database unit. When the last outbound routing packet obtained from the active database unit is the same as or adjacent to the outbound routing packet obtained from the forwarding unit, it indicates that a quantity of the outbound routing packets obtained by the standby routing fault-tolerance unit from the active database unit is the same as a quantity of the outbound routing packets obtained by the standby routing fault-tolerance unit from the forwarding unit. In this way, subsequently, the outbound routing packets from the forwarding unit can be directly received, and the outbound routing packets do not need to be obtained from the active database unit. This can ensure final consistency between the routing processing unit corresponding to the active routing fault-tolerance unit and the routing processing unit corresponding to the standby routing fault-tolerance unit.

It should be noted that the outbound routing packet may carry one packet number. In this way, whether the last outbound routing packet read by the standby routing fault-tolerance unit from the active database unit is the same as or adjacent to the outbound routing packet from the forwarding unit can be determined by using the packet number in the outbound routing packet.

Optionally, in some embodiments, after obtaining the plurality of outbound routing packets of the first routing processing unit in the foregoing manner, the standby routing fault-tolerance unit can further send the plurality of outbound routing packets of the first routing processing unit to the standby database unit, and the standby database unit stores the plurality of outbound routing packets of the first routing processing unit.

In this embodiment of this application, the inbound routing packets and the outbound routing packets of the first routing processing unit may each be BGP packets, interior gateway protocol (interior gateway protocol, IGP) packets, or label distribution protocol (label distribution protocol, LDP) packets, or certainly, may be other packets. The IGP packet may be an intermediate system-to-intermediate system (intermediate system-to-intermediate system, ISIS) packet or an open shortest path first (open shortest path first, OSPF) packet. Optionally, the outbound routing packets of another routing processing unit may also be these packets.

According to a second aspect, a routing packet processing method is provided. In the method, a standby routing fault-tolerance unit obtains a plurality of outbound routing packets of a second routing processing unit, where the second routing processing unit is a routing processing unit corresponding to the standby routing fault-tolerance unit; the standby routing fault-tolerance unit obtains a plurality of outbound routing packets of a first routing processing unit by using a forwarding unit and an active database unit, where the first routing processing unit is a routing processing unit corresponding to an active routing fault-tolerance unit; and the standby routing fault-tolerance unit determines routing update information based on the plurality of outbound routing packets of the second routing processing unit and the plurality of outbound routing packets of the first routing processing unit. After the standby routing fault-tolerance unit is switched to the new active routing fault-tolerance unit, the new active routing fault-tolerance unit sends the routing update information to a third routing processing unit. The third routing processing unit is a routing processing unit corresponding to a standby routing fault-tolerance unit other than the new active routing fault-tolerance unit.

When sending the routing update information to the third routing processing unit, the new active routing fault-tolerance unit may first send the routing update information to the forwarding unit, the forwarding unit sends the routing update information to the routing fault-tolerance unit corresponding to the third routing processing unit, and the routing fault-tolerance unit corresponding to the third routing processing unit further sends the routing update information to the third routing processing unit.

It should be noted that a method for processing the inbound routing packets and a method for processing the outbound routing packets that are provided in this embodiment of this application can be combined. Certainly, the method for processing the inbound routing packets provided in this embodiment of this application and a method for processing the outbound routing packets in a related technology can also be combined, and the method for processing the outbound routing packets provided in this embodiment of this application and a method for processing the inbound routing packets in a related technology can also be combined.

According to a third aspect, a communication device is provided. The communication device includes a standby routing fault-tolerance unit, and the standby routing fault-tolerance unit has a function of implementing behavior of the routing packet processing method in the first aspect. The standby routing fault-tolerance unit includes one or more modules, and the one or more modules are configured to implement the routing packet processing method provided in the first aspect.

According to a fourth aspect, a communication device is provided. The communication device includes a standby routing fault-tolerance unit, and the standby routing fault-tolerance unit has a function of implementing behavior of the routing packet processing method in the second aspect. The standby routing fault-tolerance unit includes one or more modules, and the one or more modules are configured to implement the routing packet processing method provided in the second aspect.

According to a fifth aspect, a communication device is provided. The communication device includes a processor and a memory, and the memory is configured to store a program for performing the routing packet processing method provided in the first aspect, and store data used to implement the routing packet processing method provided in the first aspect. The processor is configured to execute the program stored in the memory. The communication device may further include a communication bus, and the communication bus is configured to establish a connection between the processor and the memory.

According to a sixth aspect, a communication device is provided. The communication device includes a processor and a memory, and the memory is configured to store a program for performing the routing packet processing method provided in the second aspect, and store data used to implement the routing packet processing method provided in the second aspect. The processor is configured to execute the program stored in the memory. The communication device may further include a communication bus, and the communication bus is configured to establish a connection between the processor and the memory.

According to a seventh aspect, a computer-readable storage medium is provided. The computer-readable storage medium stores instructions. When the instructions are run on a computer, the computer is enabled to perform the routing packet processing method according to the first aspect.

According to an eighth aspect, a computer-readable storage medium is provided. The computer-readable storage medium stores instructions. When the instructions are run on a computer, the computer is enabled to perform the routing packet processing method according to the second aspect.

According to a ninth aspect, a computer program product including instructions is provided. When the instructions are run on a computer, the computer is enabled to perform the routing packet processing method according to the first aspect.

According to a tenth aspect, a computer program product including instructions is provided. When the instructions are run on a computer, the computer is enabled to perform the routing packet processing method according to the second aspect.

According to an eleventh aspect, a routing packet processing system is provided. The system includes: a routing node and a communication device, the communication device includes a standby routing fault-tolerance unit, and the standby routing fault-tolerance unit is configured to implement steps in the method according to the first aspect or steps in the method according to the second aspect.

Technical effects obtained in the second aspect to the eleventh aspect are similar to technical effects obtained by using a corresponding technical means in the first aspect. Details are not described herein again.

The technical solutions provided in embodiments of this application can achieve at least the following beneficial effects:

In embodiments of this application, data is synchronized in a form of the packets between the routing processing units. Because the format of the packets is standard and unified, after the data is synchronized in the form of the packets, even if data formats supported by the routing processing units are incompatible, or a routing processing unit does not have a capability of receiving and sending specific data, corresponding modification is not made on the routing processing unit, and synchronization of routing data does not fail. That is, the synchronization of the data in the form of the packets can ensure compatibility of supporting a plurality of data formats by the routing processing units. In addition, when a routing packet carries a new attribute, the routing processing unit can receive the routing packet without modification. This relatively reduces a large amount of modification work.

### BRIEF DESCRIPTION OF DRAWINGS

FIG. 1 is a schematic diagram of an implementation environment according to an embodiment of this application;
FIG. 2 is a schematic diagram of an implementation environment in which a BGP is used as an example according to an embodiment of this application;
FIG. 3 is a schematic diagram of a structure of a communication device according to an embodiment of this application;
FIG. 4 is a flowchart of a method for processing inbound routing packets according to an embodiment of this application;
FIG. 5 is a flowchart of a method for processing inbound routing packets by using a BGP as an example according to an embodiment of this application;
FIG. 6 is a flowchart of a method for processing outbound routing packets according to an embodiment of this application;
FIG. 7 is a flowchart of a method for processing outbound routing packets by using a BGP as an example according to an embodiment of this application;
FIG. 8 is a schematic diagram of a structure of a communication device according to an embodiment of this application; and
FIG. 9 is a schematic diagram of a structure of another communication device according to an embodiment of this application.

### DESCRIPTION OF EMBODIMENTS

To make objectives, technical solutions, and advantages of this application clearer, the following further describes implementations of this application in detail with reference to the accompanying drawings.

For ease of understanding, before a routing packet processing method provided in embodiments of this application is explained and described in detail, an implementation environment related to embodiments of this application is first described.

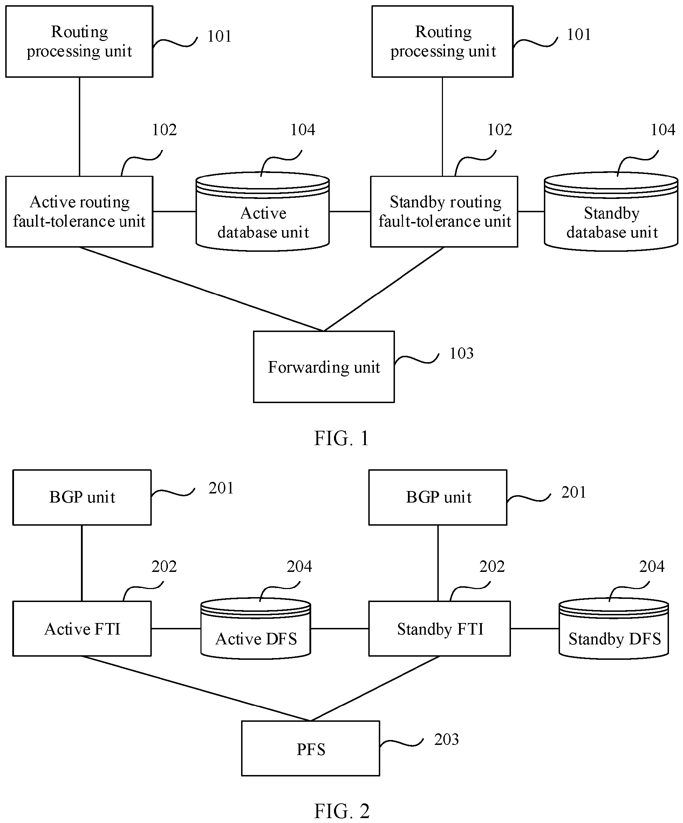

FIG. 1 is a schematic diagram of an implementation environment related to a routing packet processing method according to an embodiment of this application. A system architecture in the implementation environment includes: a plurality of routing processing units 101, a plurality of routing fault-tolerance units 102, a plurality of forwarding units 103, and a plurality of database units 104, and the plurality of routing processing units 101, the plurality of routing fault-tolerance units 102, the plurality of forwarding units 103, and the plurality of database units 104 are in one-to-one correspondence. That is, one routing processing unit 101 corresponds to one routing fault-tolerance unit 102, one forwarding unit 103, and one database unit 104.

The plurality of routing processing units 101 can be run on different virtual machines in a same communication device, or can be run on different communication devices. Each routing processing unit can establish a session with a routing node. For example, for a BGP protocol, each routing processing unit can establish a transmission control protocol (transmission control protocol, TCP) session with the routing node. Each of the plurality of routing processing units 101 is configured to implement a routing processing function.

The plurality of routing fault-tolerance units 102 can be run on different virtual machines in a same communication device, or can be run on different communication devices. In addition, the routing fault-tolerance unit 102 can be run on a same virtual machine in a same communication device with the corresponding routing processing unit 101, or can be run on different virtual machines in a same communication device with the corresponding routing processing unit 101, or can be run on different communication devices with the corresponding routing processing unit 101. However, usually, the routing fault-tolerance unit 102 is run on a same virtual machine in a same communication device with the corresponding routing processing unit 101. Each of the plurality of routing fault-tolerance units 102 is configured to implement a fault-tolerance function, namely, a function of synchronizing routing packets received and sent by the routing processing unit 101 that interacts with the routing node and that is in the plurality of routing processing units 101 to other routing processing units. The plurality of routing fault-tolerance units 102 include: one active routing fault-tolerance unit and at least one standby routing fault-tolerance unit, and the routing fault-tolerance unit 102 can be connected to the corresponding routing processing unit 101 to perform communication.

The plurality of forwarding units 103 can be run on different virtual machines in a same communication device, or can be run on different communication devices. In addition, the forwarding unit 103 can be run on a same virtual machine in a same communication device with the corresponding routing processing unit 101 or routing fault-tolerance unit 102, or can be run on different virtual machines in a same communication device with the corresponding routing processing unit 101 or routing fault-tolerance unit 102, or can be run on different communication devices with the corresponding routing processing unit 101 or routing fault-tolerance unit 102. Each of the plurality of forwarding units 103 is configured to transmit packets between the routing processing unit and the routing node, and the plurality of forwarding units 103 include: one active forwarding unit and at least one standby forwarding unit. At a same time point, only the active forwarding unit is configured to transmit packets between the routing processing unit and the routing node, and the standby forwarding unit does not transmit packets. In addition, the active forwarding unit can be connected to each standby routing fault-tolerance unit to perform communication.

The plurality of database units 104 can be run on different virtual machines in a same communication device, or can be run on different communication devices. In addition, the database unit 104 can be run on a same virtual machine in a same communication device with the corresponding routing processing unit 101, routing fault-tolerance unit 102, or forwarding unit 103, or can be run on different virtual machines in a same communication device with the corresponding routing processing unit 101, routing fault-tolerance unit 102, or forwarding unit 103, or can be run on different communication devices with the corresponding routing processing unit 101, routing fault-tolerance unit 102, or forwarding unit 103. The database unit corresponding to the active routing fault-tolerance unit may be referred to as an active database unit, and the database unit corresponding to the standby routing fault-tolerance unit may be referred to as a standby database unit. The database unit 104 can be connected to the corresponding routing fault-tolerance unit 102 to perform communication. In addition, the standby routing fault-tolerance unit can be further connected to the database unit 104 corresponding to the active routing fault-tolerance unit to perform communication.

In FIG. 1, two routing processing units are used to schematically represent the plurality of routing processing units 101, one active routing fault-tolerance unit and one standby routing fault-tolerance unit are used to schematically represent the plurality of routing fault-tolerance units 102, and one active database unit and one standby database unit are used to schematically represent the plurality of database units 104. At a same time point, only the active forwarding unit is configured to transmit packets between the routing processing unit and the routing node, and the standby forwarding unit does not transmit packets. Therefore, FIG. 1 shows only one forwarding unit, and the forwarding unit is the active forwarding unit.

It should be noted that the foregoing uses an example in which one routing processing unit corresponds to one routing fault-tolerance unit, one forwarding unit, and one database unit for description. In another implementation environment, the entire system architecture may include only one forwarding unit, and the forwarding unit can transmit packets between the routing processing unit and the routing node. Optionally, the entire system architecture may alternatively include only one active database unit and one standby database unit. The active database unit is configured to store related data of a routing processing unit corresponding to the active routing fault-tolerance unit, and the standby database unit is configured to store related data of routing processing units corresponding to the standby routing fault-tolerance units.

The BGP protocol is used as an example. The routing processing unit 101 is a BGP unit, also referred to as a BGP plane, and is configured to implement a BGP routing processing function. The routing fault-tolerance unit 102 is a BGP fault-tolerance infrastructure (BGP fault-tolerance infrastructure), and is configured to implement a fault-tolerance function, namely, a function of performing data synchronization between a plurality of BGP units. The forwarding unit 103 is a packet fault-tolerance service (Packet Fault-tolerance Service, PFS), and is configured to transmit routing packets between the BGP unit and the routing node. The database unit 104 is a data fault-tolerance service (Data fault-tolerance service, DFS), and is configured to store BGP-related data. As shown in FIG. 2, the system architecture includes: a plurality of BGP units 201, a plurality of BGP FTIs 202, a plurality of PFSs 203, and a plurality of DFSs 204. The plurality of BGP FTIs 202 include one active FTI and at least one standby FTI. The plurality of PFSs 203 include one active PFS and at least one standby PFS. The plurality of DFSs include one active DFS and at least one standby DFS. Each BGP unit is connected to the corresponding BGP FTI 202 to perform communication, and each BGP FTI 202 is connected to the active PFS to perform communication. Each BGP FTI 202 is further connected to the corresponding DFS 204 to perform communication. At a same time point, only the active PFS is used to transmit packets between the BGP unit and the routing node, and the standby PFS does not transmit packets. Therefore, FIG. 2 shows only one PFS, and the PFS is the active PFS.

In the plurality of deployed BGP FTIs, a LES can elect one BGP FTI from the plurality of deployed BGP FTIs as an active FTI, and other BGP FTIs than the active FTI in the plurality of deployed BGP FTIs are used as standby FTIs. Only a BGP unit corresponding to the active FTI establishes a BGP peer connection to the routing node, and receives and sends routing packets. The routing packets may include one or more of inbound routing packets or outbound routing packets. The inbound routing packets are routing packets received, from the routing node, by the BGP unit corresponding to the active FTI, and the outbound routing packets are routing packets sent by the BGP unit corresponding to the active FTI to the routing node.

In the plurality of deployed PFSs, the LES may further elect one PFS from the plurality of deployed PFSs as an active PFS. For the inbound routing packets, the active PFS may send, by using the active FTI, the inbound routing packets to the BGP unit corresponding to the active FTI, or may send the inbound routing packets to the standby FTIs. The active FTI may intercept inbound routing packets transmitted by the active PFS, to cooperate with the standby FTIs to implement consistency between the packets of the plurality of deployed BGP units. Detailed content is described below, and details are not described herein.

It should be noted that the foregoing uses the BGP routing protocol as an example for description. In some other embodiments, the method provided in this application may be further applied to another routing protocol, for example, a routing protocol such as an ISIS routing protocol, an OSPF routing protocol, or an LDP routing protocol.

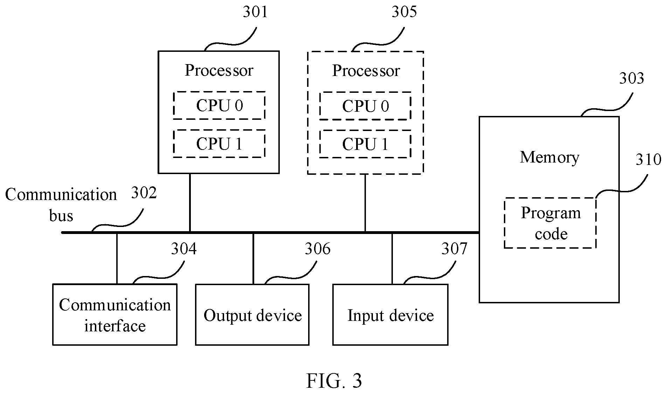

FIG. 3 is a schematic diagram of a structure of a communication device according to an embodiment of this application. The communication device may include: one or more processors 301, a communication bus 302, a memory 303, and one or more communication interfaces 304.

The processor 301 may be a general-purpose central processor unit (central processing unit, CPU), a network processor (network processor, NP), a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication bus 302 is configured to transmit information between the foregoing components. The communication bus 302 may be classified into an address bus, a data bus, a control bus, and the like. For ease of representation, only one thick line is used to represent the bus in the figure, but this does not mean that there is only one bus or only one type of bus.

The memory 303 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or a data structure and that is accessible to a computer. However, this is not limited hereto. The memory 303 may exist independently, and be connected to the processor 301 through the communication bus 302. The memory 303 may alternatively be integrated with the processor 301.

The communication interface 304 is configured to communicate with another device or a communication network by using any transceiver-type apparatus. The communication interface 304 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In some embodiments, the communication device may include a plurality of processors, for example, a processor 301 and a processor 305 shown in FIG. 3. Each of the processors may be a single-core processor, or may be a multi-core processor. The processor herein may refer to one or more devices, circuits, and/or processing cores configured to process data (such as computer program instructions).

During specific implementation, in an embodiment, the communication device may further include an output device 306 and an input device 307. The output device 306 communicates with the processor 301, and may display information in a plurality of manners. For example, the output device 306 may be a liquid crystal display (liquid crystal display, LCD), a light emitting diode (light emitting diode, LED) display device, a cathode ray tube (cathode ray tube, CRT) display device, or a projector (projector). The input device 307 communicates with the processor 301, and may receive an input of a user in a plurality of manners. For example, the input device 307 may be a mouse, a keyboard, a touchscreen device, or a sensing device.

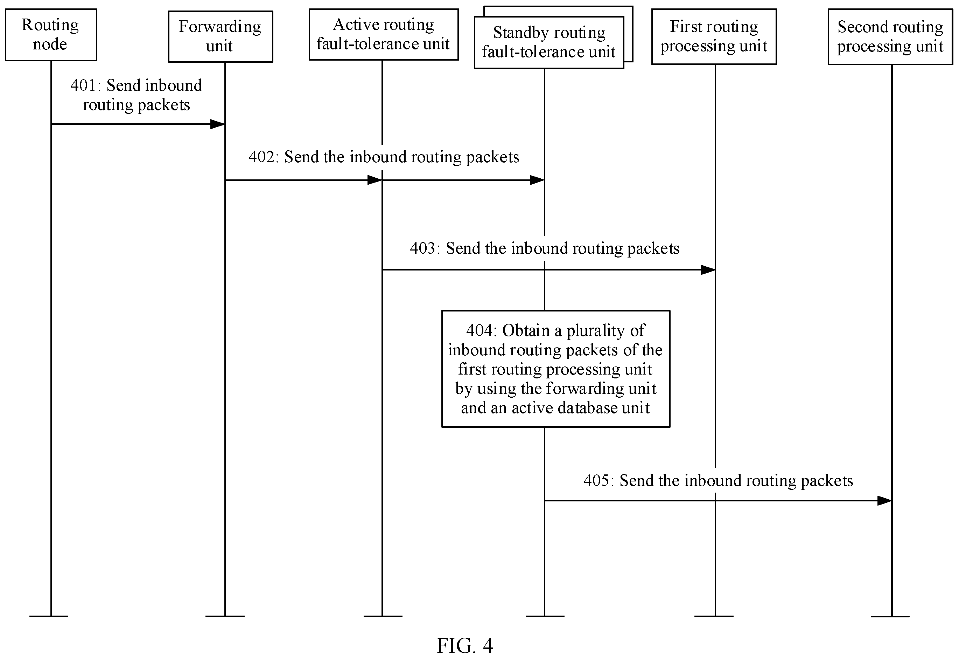

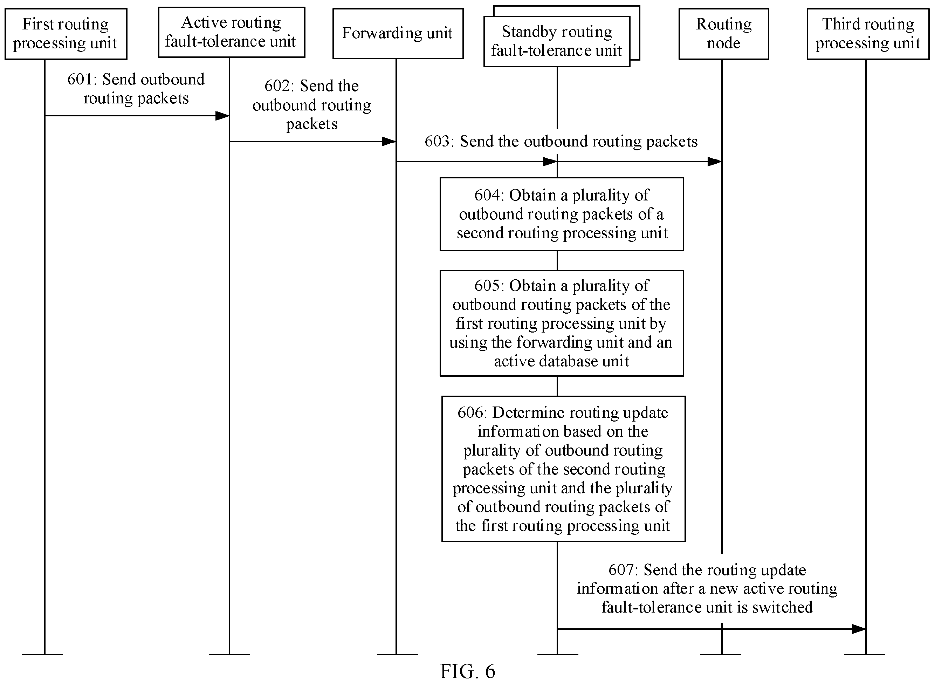

In some embodiments, the memory 303 is configured to store program code 310 for executing the solutions of this application, or in other words, is configured to store program code for implementing one or more units of the routing processing unit, the routing fault-tolerance unit, the forwarding unit, and the database unit. The processor 301 may execute the program code 310 stored in the memory 303. The communication device may implement, by using the processor 301 and the program code 310 in the memory 303, the routing packet processing method provided in the following embodiment in FIG. 4 or FIG. 6.

It should be noted that one or more of the routing processing unit, the routing fault-tolerance unit, the forwarding unit, and the database unit are deployed in the communication device shown in FIG. 3. In other words, one or more of the routing processing unit, the routing fault-tolerance unit, the forwarding unit, and the database unit can be run on the communication device shown in FIG. 3. In other words, each of the routing processing unit, the routing fault-tolerance unit, the forwarding unit, and the database unit can be separately run on an independent communication device shown in FIG. 3, or k units in the foregoing units are run on h independent communication devices shown in FIG. 3, where h is less than k.

After the implementation environment related to embodiments of this application is explained, the following describes in detail the routing packet processing method provided in embodiments of this application. According to the method provided in embodiments of this application, inbound routing packets can be processed, and outbound routing packets can also be processed. Therefore, the following separately describes two embodiments.

FIG. 4 is a flowchart of a routing packet processing method according to an embodiment of this application. In this embodiment, a method for processing inbound routing packets is described. The method includes the following steps.

Step 401: A forwarding unit receives inbound routing packets from a routing node.

The forwarding unit is configured to transmit the packets between a first routing processing unit and the routing node. Because the inbound routing packets are packets sent by the routing node to the first routing processing unit, the forwarding unit can receive the inbound routing packets from the routing node. The first routing processing unit is a routing processing unit corresponding to an active routing fault-tolerance unit.

It should be noted that in this embodiment of this application, when an entire system architecture includes a plurality of forwarding units, in other words, each routing processing unit corresponds to one forwarding unit, the forwarding unit mentioned in this embodiment of this application is an active forwarding unit in the plurality of forwarding units. When an entire system architecture includes one forwarding unit, in other words, a plurality of routing processing units correspond to a same forwarding unit, the forwarding unit mentioned in this embodiment of this application is the forwarding unit.

Step 402: The forwarding unit sends the inbound routing packets to the active routing fault-tolerance unit and at least one standby routing fault-tolerance unit.

The forwarding unit is configured to transmit the packets between the first routing processing unit and the routing node, and is further configured to synchronize related data of the first routing processing unit to other routing processing units that have gone online. Therefore, after receiving the inbound routing packets, the forwarding unit sends the inbound routing packets to the active routing fault-tolerance unit, and the active routing fault-tolerance unit sends the inbound routing packets to the first routing processing unit. In addition, the forwarding unit sends the inbound routing packets to other standby routing fault-tolerance units that have gone online. In this way, the inbound routing packets are synchronized.

It should be noted that in this embodiment of this application, start time points of the deployed routing processing units may be different, in other words, online time points of the deployed routing processing units may be different. For other offline routing processing units than the first routing processing unit, after receiving the inbound routing packets, the forwarding unit does not send the inbound routing packets to routing fault-tolerance units corresponding to these offline routing processing units. However, for other online routing processing units than the first routing processing unit, routing fault-tolerance units corresponding to these online routing processing units are standby routing fault-tolerance units. After receiving the inbound routing packets, the forwarding unit sends the inbound routing packets to the active routing fault-tolerance unit, and further needs to send the inbound routing packets to these standby routing fault-tolerance units.

To implement multi-point fault tolerance, a quantity of deployed routing processing units needs to be greater than a required quantity of reliable routing processing units. For example, the quantity of deployed routing processing units is directly proportional to the required quantity of reliable routing processing units. For another example, a difference between the quantity of deployed routing processing units and the required quantity of reliable routing processing units is greater than a reference value. For example, to implement n-point fault tolerance, at least n+1 reliable routing processing units are required, in other words, at least n standby routing processing units are required. In this way, m^{∗}n+1 routing processing units may be deployed. The m^{∗}n+1 routing processing units include one active routing processing unit and m*n standby routing processing units. n is a positive integer, m is a positive number, and m≥1. Because the routing processing units are in one-to-one correspondence with the routing fault-tolerance units, the quantity of deployed routing fault-tolerance units needs to be greater than the required quantity of reliable routing processing units.

Step 403: The active routing fault-tolerance unit receives the inbound routing packets from the forwarding unit, and sends the inbound routing packets to the first routing processing unit.

After receiving the inbound routing packets, the active routing fault-tolerance unit sends the inbound routing packets to the first routing processing unit, so that the inbound routing packets are transmitted.

Optionally, in some embodiments, to synchronize the inbound routing packets received by the first routing processing unit to other routing processing units, the active routing fault-tolerance unit further needs to store the inbound routing packets in an active database unit.

Step 404: The standby routing fault-tolerance unit obtains a plurality of inbound routing packets of the first routing processing unit by using the forwarding unit and the active database unit.

Based on the foregoing descriptions, online time points of the deployed routing processing units may be different. Therefore, for other online routing processing units than the first routing processing unit, routing fault-tolerance units corresponding to these routing processing units are standby routing fault-tolerance units, and these standby routing fault-tolerance units can read related data of the first routing processing unit from the active database unit. In addition, after receiving the inbound routing packets, the forwarding unit further needs to send the inbound routing packets to these standby routing fault-tolerance units. In this way, these standby routing fault-tolerance units can not only receive the inbound routing packets sent by the forwarding unit, but also read the inbound routing packets from the active database unit. However, there are a plurality of implementations in which packets are obtained by the standby routing fault-tolerance unit. Two of the implementations are described below.

Manner 1: The standby routing fault-tolerance unit receives the inbound routing packets from the forwarding unit. If the standby routing fault-tolerance unit is not in a real-time protection state, the standby routing fault-tolerance unit discards the inbound routing packets from the forwarding unit, but reads the plurality of inbound routing packets of the first routing processing unit from the active database unit. If the standby routing fault-tolerance unit is already in the real-time protection state, the standby routing fault-tolerance unit obtains the plurality of inbound routing packets of the first routing processing unit by using the forwarding unit.

The real-time protection state is a state in which the routing processing unit corresponding to the standby routing fault-tolerance unit can take over work of the routing processing unit corresponding to the active routing fault-tolerance unit. To be specific, when the routing processing unit corresponding to the active routing fault-tolerance unit is faulty, or the active routing fault-tolerance unit is faulty, a LES can elect a routing fault-tolerance unit from the standby routing fault-tolerance units in the real-time protection state as an active routing fault-tolerance unit, and a routing processing unit corresponding to the re-elected active routing fault-tolerance unit can establish a routing peer connection with a routing node, and receive and send a BGP route, so that the BGP peer connection and the BGP route are uninterrupted. This may also be understood as that, a quantity of the inbound routing packets read by the standby routing fault-tolerance unit in the real-time protection state from the active database unit is the same as a quantity of the inbound routing packets received by the standby routing fault-tolerance unit from the forwarding unit. This ensures final consistency between the routing processing unit corresponding to the active routing fault-tolerance unit and the routing processing unit corresponding to the standby routing fault-tolerance unit.

When the standby routing fault-tolerance unit is not in the real-time protection state, it indicates that the standby routing fault-tolerance unit does not completely read all data of the first routing processing unit in an inbound direction from the active database unit. Therefore, the standby routing fault-tolerance unit needs to read the inbound routing packets from the active database unit. When the standby routing fault-tolerance unit is already in the real-time protection state, it indicates that the standby routing fault-tolerance unit has completely read all data of the first routing processing unit in an inbound direction from the active database unit. In this case, the standby routing fault-tolerance unit does not need to read the inbound routing packets from the active database unit again, but directly obtains the inbound routing packets sent by the forwarding unit. That is, in Manner 1, before the standby routing fault-tolerance unit enters the real-time protection state, the standby routing fault-tolerance unit discards the inbound routing packets from the forwarding unit, but reads the inbound routing packets from the active database unit. After the standby routing fault-tolerance unit enters the real-time protection state, the standby routing fault-tolerance unit does not read the inbound routing packets from the active database unit any more, but obtains the inbound routing packets from the forwarding unit.

Manner 2: The standby routing fault-tolerance unit receives the inbound routing packets from the forwarding unit, and also reads the inbound routing packets of the first routing processing unit from the active database unit. When a last inbound routing packet read from the active database unit is the same as or adjacent to one inbound routing packet from the forwarding unit, the standby routing fault-tolerance unit stops reading the inbound routing packets from the active database unit.

That is, in Manner 2, whether the standby routing fault-tolerance unit is in the real-time protection state does not need to be determined, but the inbound routing packets are obtained from both the forwarding unit and the active database unit. When the last inbound routing packet obtained from the active database unit is the same as or adjacent to the inbound routing packet obtained from the forwarding unit, it indicates that a quantity of the inbound routing packets obtained by the standby routing fault-tolerance unit from the active database unit is the same as a quantity of the inbound routing packets obtained by the standby routing fault-tolerance unit from the forwarding unit. In this way, subsequently, the inbound routing packets from the forwarding unit can be directly received, and the inbound routing packets do not need to be obtained from the active database unit. This can ensure final consistency between the routing processing unit corresponding to the active routing fault-tolerance unit and the routing processing unit corresponding to the standby routing fault-tolerance unit.

It should be noted that the inbound routing packet may carry one packet number. In this way, whether the last inbound routing packet read by the standby routing fault-tolerance unit from the active database unit is the same as or adjacent to the inbound routing packet from the forwarding unit can be determined by using the packet number in the inbound routing packet.

Step 405: The standby routing fault-tolerance unit sends the plurality of inbound routing packets of the first routing processing unit to a second routing processing unit, where the second routing processing unit is a routing processing unit corresponding to the standby routing fault-tolerance unit.

The standby routing fault-tolerance unit sends the plurality of inbound routing packets of the first routing processing unit to the second routing processing unit, so that the inbound routing packets of the first routing processing unit can be synchronized to the second routing processing unit.

Optionally, in some embodiments, the standby routing fault-tolerance unit can further send the plurality of inbound routing packets of the first routing processing unit to a standby database unit, and the standby database unit stores the plurality of inbound routing packets of the first routing processing unit. In this way, after the standby routing fault-tolerance unit is elected as the new active routing fault-tolerance unit, other online standby routing fault-tolerance units may further obtain the inbound routing packets from the standby database unit.

It should be noted that the inbound routing packet of the first routing processing unit is a BGP packet, an IGP packet, or an LDP packet, or certainly, may be another packet. The IPG packet may be an ISIS packet or an OSPF packet.

In summary, in this embodiment of this application, data is synchronized in a form of the packets between the routing processing units. Because the format of the packets is standard and unified, after the data is synchronized in the form of the packets, even if data formats supported by the routing processing units are incompatible, or a routing processing unit does not have a capability of receiving and sending specific data, corresponding modification is not made on the routing processing unit, and synchronization of routing data does not fail. That is, the synchronization of the routing data in the form of the packets can ensure compatibility of supporting a plurality of data formats by the routing processing units. In addition, when an inbound routing packet carries a new attribute, the routing processing unit can receive the inbound routing packet without modification. This relatively reduces a large amount of modification work. At the same time, because the second routing processing unit can obtain routing information received by the first routing processing unit, after the routing fault-tolerance unit corresponding to the second routing processing unit is switched to the active routing fault-tolerance unit, a forwarding table in the forwarding unit remains correct, or remains correct to a large extent.

In addition, in this embodiment of this application, the routing processing units do not affect each other, only the active routing fault-tolerance unit and the standby routing fault-tolerance units affect each other and have a logic difference, and the routing fault-tolerance units do not perceive the routing processing units and do not depend on content of the routing processing units to implement decoupling. That is, a routing processing function is decoupled from a fault-tolerance function. In this way, when the routing processing unit corresponding to the active routing fault-tolerance unit is faulty or the active routing fault-tolerance unit is faulty, a routing processing unit may be quickly selected online from other routing processing units to establish a peer relationship with the routing node, and impact of the fault-tolerance function does not need to be considered, so that an effect of non-stop routing is better, and some other online verification work can be further performed. In addition, because the routing processing function is decoupled from the fault-tolerance function, when one routing processing unit needs to be extended, one routing processing unit and one routing fault-tolerance unit may be separately added, and impact between the routing processing units does not need to be considered, so that extensibility of the system architecture is good.

In addition, in this embodiment of this application, because the routing processing function is decoupled from the fault-tolerance function, and the routing processing units do not have an active/standby relationship, the routing processing units do not need to process logic such as active/standby data synchronization, real-time protection state demarcation, and active/standby switching. In addition, the standby database unit stores all inbound routing packets. Therefore, after a routing processing unit corresponding to a standby routing fault-tolerance unit is faulty, fault data recovery can be completed by using the inbound routing packets in the standby database unit, so that system reliability is further improved.

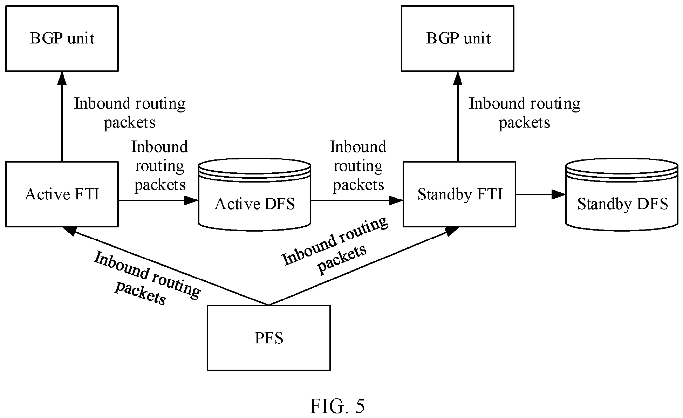

The following uses the BGP protocol as an example to describe a method for synchronizing the inbound routing packets. Refer to FIG. 5. A PFS receives inbound routing packets from a routing node. The PFS sends the inbound routing packets to an active FTI and at least one standby FTI that has gone online. The active FTI receives the inbound routing packets, sends the inbound routing packets to a corresponding BGP unit, and stores the inbound routing packets in an active DFS. The standby FTI obtains, by using the PFS and the active DFS, a plurality of inbound routing packets of the BGP unit corresponding to the active FTI, and sends the obtained inbound routing packets to a BGP unit corresponding to the standby FTI.

It should be noted that in FIG. 5, two BGP units are used as an example for illustration, and one active FTI and one standby FTI are used as an example for illustration. Because only one PFS participates in a process of synchronizing the inbound routing packets, FIG. 5 shows only one PFS.

FIG. 6 is a flowchart of a routing packet processing method according to an embodiment of this application. In this embodiment, a method for processing outbound routing packets is described. The method includes the following steps.

Step 601: A first routing processing unit sends outbound routing packets to an active routing fault-tolerance unit, where the first routing processing unit is a routing processing unit corresponding to the active routing fault-tolerance unit.

The outbound routing packets are packets sent by the routing processing unit corresponding to the active routing fault-tolerance unit to a routing node.

Step 602: The active routing fault-tolerance unit receives the outbound routing packets from the first routing processing unit, and sends the outbound routing packets of the first processing unit to a forwarding unit.

The forwarding unit is configured to transmit the packets between the first routing processing unit and the routing node. Therefore, after receiving the outbound routing packets, the active routing fault-tolerance unit sends the outbound routing packets to the forwarding unit.

Optionally, to facilitate synchronization of routing data between the first routing processing unit and other routing processing units, after receiving the outbound routing packets, the active routing fault-tolerance unit further needs to store the outbound routing packets in an active database unit.

It should be noted that in this embodiment of this application, when an entire system architecture includes a plurality of forwarding units, in other words, each routing processing unit corresponds to one forwarding unit, the forwarding unit mentioned in this embodiment of this application is an active forwarding unit in the plurality of forwarding units. When an entire system architecture includes one forwarding unit, in other words, a plurality of routing processing units correspond to a same forwarding unit, the forwarding unit mentioned in this embodiment of this application is the forwarding unit.

Step 603: The forwarding unit receives the outbound routing packets, and sends the outbound routing packets to the routing node and at least one standby routing fault-tolerance unit.

The forwarding unit is configured to transmit the packets between the first routing processing unit and the routing node, and is further configured to synchronize related data of the first routing processing unit to other routing processing units that have gone online. Therefore, after receiving the outbound routing packet, the forwarding unit sends the outbound routing packets to the routing node, so that the outbound routing packets are transmitted. In addition, the forwarding unit sends the outbound routing packets to other standby routing fault-tolerance units that have gone online. In this way, the outbound routing packets are synchronized.

It should be noted that in this embodiment of this application, start time points of the deployed routing processing units may be different, in other words, online time points of the deployed routing processing units may be different. For other offline routing processing units than the first routing processing unit, after receiving the outbound routing packets, the forwarding unit does not send the outbound routing packets to routing fault-tolerance units corresponding to these offline routing processing units. However, for other online routing processing units than the first routing processing unit, routing fault-tolerance units corresponding to these online routing processing units are standby routing fault-tolerance units. After receiving the outbound routing packets, the forwarding unit sends the outbound routing packets to the routing node, and further needs to send the outbound routing packets to these standby routing fault-tolerance units.

Based on the foregoing descriptions, to implement multi-point fault tolerance, a quantity of deployed routing processing units needs to be greater than a required quantity of reliable routing processing units. For example, the quantity of deployed routing processing units is directly proportional to the required quantity of reliable routing processing units. For another example, a difference between the quantity of deployed routing processing units and the required quantity of reliable routing processing units is greater than a reference value. Because the routing processing units are in one-to-one correspondence with the routing fault-tolerance units, the quantity of deployed routing fault-tolerance units needs to be greater than the required quantity of reliable routing processing units.

Step 604: The standby routing fault-tolerance unit obtains a plurality of outbound routing packets of a second routing processing unit, where the second routing processing unit is a routing processing unit corresponding to the standby routing fault-tolerance unit.

In this embodiment of this application, the routing processing units do not have an active/standby relationship. Therefore, each routing processing unit may send the outbound routing packets to the corresponding routing fault-tolerance unit. That is, the standby routing fault-tolerance unit can receive a plurality of outbound routing packets from the second routing processing unit.

It should be noted that in this embodiment of this application, the routing fault-tolerance units have the active/standby relationship, and the routing processing unit corresponding to the active routing fault-tolerance unit establishes a peer relationship with the routing node. In other words, the first routing processing unit establishes the peer relationship with the routing node, and the second routing processing unit does not establish the peer relationship with the routing node. Therefore, the active routing fault-tolerance unit can send, to the routing node by using the forwarding unit, the outbound routing packets sent by the first routing processing unit, but the standby routing fault-tolerance unit cannot send, to the routing node by using the forwarding unit, the outbound routing packets sent by the second routing processing unit, but can only locally store the outbound routing packets sent by the second routing processing unit. That is, after receiving the plurality of outbound routing packets from the second routing processing unit, the standby routing fault-tolerance unit locally stores the plurality of outbound routing packets of the second routing processing unit in the standby routing fault-tolerance unit.

Step 605: The standby routing fault-tolerance unit obtains a plurality of outbound routing packets of the first routing processing unit by using the forwarding unit and the active database unit.

Based on the foregoing descriptions, online time points of the deployed routing processing units may be different. Therefore, for other online routing processing units than the first routing processing unit, routing fault-tolerance units corresponding to these routing processing units are standby routing fault-tolerance units, and these standby routing fault-tolerance units can read related data of the first routing processing unit from the active database unit. In addition, after receiving the outbound routing packets, the forwarding unit further needs to send the outbound routing packets to these standby routing fault-tolerance units. In this way, these standby routing fault-tolerance units can not only receive the outbound routing packets sent by the forwarding unit, but also read the outbound routing packets from the active database unit. However, there are a plurality of implementations in which packets are obtained by the standby routing fault-tolerance unit. Two of the implementations are described below.

Manner 1: The standby routing fault-tolerance unit receives the outbound routing packets from the forwarding unit. If the standby routing fault-tolerance unit is not in a real-time protection state, the standby routing fault-tolerance unit discards the outbound routing packets from the forwarding unit, but reads the outbound routing packets of the first routing processing unit from the active database unit. If the standby routing fault-tolerance unit is already in the real-time protection state, the standby routing fault-tolerance unit obtains the plurality of outbound routing packets of the first routing processing unit by using the forwarding unit.

The real-time protection state is a state in which the routing processing unit corresponding to the standby routing fault-tolerance unit can take over work of the routing processing unit corresponding to the active routing fault-tolerance unit. To be specific, when the routing processing unit corresponding to the active routing fault-tolerance unit is faulty, or the active routing fault-tolerance unit is faulty, a LES can elect a routing fault-tolerance unit from the standby routing fault-tolerance units in the real-time protection state as an active routing fault-tolerance unit, and a routing processing unit corresponding to the re-elected active routing fault-tolerance unit can establish a routing peer connection with a routing node, and receive and send a BGP route, so that the BGP peer connection and the BGP route are uninterrupted. This may also be understood as that, a quantity of the outbound routing packets read by the standby routing fault-tolerance unit in the real-time protection state from the active database unit is the same as a quantity of the outbound routing packets received by the standby routing fault-tolerance unit from the forwarding unit. This ensures final consistency between the routing processing unit corresponding to the active routing fault-tolerance unit and the routing processing unit corresponding to the standby routing fault-tolerance unit.

When the standby routing fault-tolerance unit is not in the real-time protection state, it indicates that the standby routing fault-tolerance unit does not completely read all data of the first routing processing unit in an outbound direction from the active database unit. Therefore, the standby routing fault-tolerance unit needs to read the outbound routing packets from the active database unit. When the standby routing fault-tolerance unit is already in the real-time protection state, it indicates that the standby routing fault-tolerance unit has completely read all data of the first routing processing unit in an outbound direction from the active database unit. In this case, the standby routing fault-tolerance unit does not need to read the outbound routing packets from the active database unit again, but directly obtains the outbound routing packets sent by the forwarding unit. That is, in Manner 1, before the standby routing fault-tolerance unit enters the real-time protection state, the standby routing fault-tolerance unit discards the outbound routing packets from the forwarding unit, but reads the outbound routing packets from the active database unit. After the standby routing fault-tolerance unit enters the real-time protection state, the standby routing fault-tolerance unit does not read the outbound routing packets from the active database unit any more, but obtains the outbound routing packets from the forwarding unit.

Manner 2: The standby routing fault-tolerance unit receives the outbound routing packets from the forwarding unit, and also reads the outbound routing packets of the first routing processing unit from the active database unit. When a last outbound routing packet read from the active database unit is the same as or adjacent to one outbound routing packet from the forwarding unit, the standby routing fault-tolerance unit stops reading the outbound routing packets from the active database unit.

That is, in Manner 2, whether the standby routing fault-tolerance unit is in the real-time protection state does not need to be determined, but the outbound routing packets are obtained from both the forwarding unit and the active database unit. When the last outbound routing packet obtained from the active database unit is the same as or adjacent to the outbound routing packet obtained from the forwarding unit, it indicates that a quantity of the outbound routing packets obtained by the standby routing fault-tolerance unit from the active database unit is the same as a quantity of the outbound routing packets obtained by the standby routing fault-tolerance unit from the forwarding unit. In this way, subsequently, the outbound routing packets from the forwarding unit can be directly received, and the outbound routing packets do not need to be obtained from the active database unit. This can ensure final consistency between the routing processing unit corresponding to the active routing fault-tolerance unit and the routing processing unit corresponding to the standby routing fault-tolerance unit.

It should be noted that the outbound routing packet may carry one packet number. In this way, whether the last outbound routing packet read by the standby routing fault-tolerance unit from the active database unit is the same as or adjacent to the outbound routing packet from the forwarding unit can be determined by using the packet number in the outbound routing packet.

Optionally, in some embodiments, after obtaining the plurality of outbound routing packets of the first routing processing unit in the foregoing manner, the standby routing fault-tolerance unit can further send the plurality of outbound routing packets of the first routing processing unit to the standby database unit, and the standby database unit stores the plurality of outbound routing packets of the first routing processing unit.

Step 606: The standby routing fault-tolerance unit determines routing update information based on the plurality of outbound routing packets of the second routing processing unit and the plurality of outbound routing packets of the first routing processing unit.

Based on the foregoing descriptions, in this embodiment of this application, the routing processing units do not have an active/standby relationship. Therefore, each routing processing unit may send the outbound routing packets to the corresponding routing fault-tolerance unit. However, the routing fault-tolerance units have an active/standby relationship, and a peer relationship is established between the first routing processing unit and the routing node. Therefore, the active routing fault-tolerance unit can send, to the routing node by using the forwarding unit, the outbound routing packets sent by the first routing processing unit, but the standby routing fault-tolerance unit cannot send, to the routing node by using the forwarding unit, the outbound routing packets sent by the second routing processing unit, but can only locally store the outbound routing packets sent by the second routing processing unit.

In this way, subsequently, when the first routing processing unit or the active routing fault-tolerance unit is faulty, if a standby routing fault-tolerance unit is elected as a new active routing fault-tolerance unit, to ensure that a routing processing unit corresponding to the new active routing fault-tolerance unit can successfully take over a task of the original first routing processing unit, the new active routing fault-tolerance unit compares the plurality of outbound routing packets of the second routing processing unit with the plurality of outbound routing packets of the first routing processing unit. If there is a difference between the plurality of outbound routing packets of the second routing processing unit and the plurality of outbound routing packets of the first routing processing unit, the new active routing fault-tolerance unit may determine routing update information based on the plurality of outbound routing packets of the second routing processing unit and the plurality of outbound routing packets of the first routing processing unit.

The routing update information may include a route that needs to be modified, and may further include a route that needs to be withdrawn.

For example, a BGP protocol is used as an example. For inbound RouteRefresh (RouteRefresh) packets, if a BGP unit corresponding to an original active FTI does not complete sending of a batch of update (Update) packets, a new active FTI sends the RouteRefresh packets to a corresponding BGP unit, to trigger the BGP unit corresponding to the new active FTI to resend the batch of Update packets. For outbound Update packets, the new active FTI determines through comparison whether there is a difference between Update packets sent by the BGP unit corresponding to the new active FTI and Update packets sent by the BGP unit corresponding to the original active FTI. If there is the difference, the new active FTI sends the Update packets sent by the BGP unit corresponding to the new active FTI to the routing node, to trigger route modification or withdrawal.

Based on the foregoing descriptions, the standby routing fault-tolerance unit locally stores the outbound routing packets of the second routing processing unit, and stores the outbound routing packets of the first routing processing unit in the standby database unit. Therefore, in some embodiments, the standby routing fault-tolerance unit may compare the locally stored outbound routing packets with the outbound routing packets stored in the standby database unit, to determine whether there is the difference between the outbound routing packets of the second routing processing unit and the outbound routing packets of the first routing processing unit.

Step 607: After the standby routing fault-tolerance unit is switched to the new active routing fault-tolerance unit, the new active routing fault-tolerance unit sends the routing update information to a third routing processing unit, where the third routing processing unit is a routing processing unit corresponding to a standby routing fault-tolerance unit other than the new active routing fault-tolerance unit.

Because there is the difference between the plurality of outbound routing packets of the second routing processing unit and the plurality of outbound routing packets of the first routing processing unit, to ensure that the routing processing unit corresponding to the new active routing fault-tolerance unit can successfully take over the task of the original first routing processing unit, the new active routing fault-tolerance unit sends the routing update information to the third routing processing unit. In some embodiments, the new active routing fault-tolerance unit may send the routing update information to the third routing processing unit in a packet update manner.

When sending the routing update information to the third routing processing unit, the new active routing fault-tolerance unit may first send the routing update information to the forwarding unit, the forwarding unit sends the routing update information to the routing fault-tolerance unit corresponding to the third routing processing unit, and the routing fault-tolerance unit corresponding to the third routing processing unit further sends the routing update information to the third routing processing unit.

It should be noted that the standby routing fault-tolerance unit may determine the foregoing routing update information before being switched to the new active routing fault-tolerance unit, or may determine the foregoing routing update information after being switched to the new active routing fault-tolerance unit. An occasion for determining the routing update information is not limited in this embodiment of this application. In the latter case, the standby routing fault-tolerance unit is actually the new active routing fault-tolerance unit.

It should be noted that the outbound routing packet of the first routing processing unit is a BGP packet, an IGP packet, or an LDP packet, or certainly, may be another packet. The IPG packet may be an ISIS packet or an OSPF packet. Optionally, the outbound routing packets of another routing processing unit may also be these packets.

In summary, in this embodiment of this application, data is synchronized in a form of the packets between the routing processing units. Because the form of the packets is standard and unified, after the data is synchronized in the form of the packets, even if data formats supported by the routing processing units are incompatible, or a routing processing unit does not have a capability of receiving and sending specific data, synchronization of routing data does not fail. That is, the synchronization of the routing data in the form of the packets can ensure compatibility of supporting a plurality of data formats by the routing processing units. In addition, when an outbound routing packet carries a new attribute, the routing processing unit can receive the outbound routing packet without modification. This relatively reduces a large amount of modification work. In addition, after obtaining routing information sent by the first routing processing unit, the second routing processing unit may further compare the routing information sent by the first routing processing unit with routing information that the second routing processing unit intends to send, to determine the routing update information. In this way, after the routing fault-tolerance unit corresponding to the second routing processing unit is switched to the active routing fault-tolerance unit, routing information that is previously released by the first routing processing unit and is incorrect for the second routing processing unit can be modified. This avoids the incorrect routing information in a network.

In addition, in this embodiment of this application, the routing processing units do not affect each other, only the active routing fault-tolerance unit and the standby routing fault-tolerance units affect each other and have a logic difference, and the routing fault-tolerance units do not perceive the routing processing units and do not depend on content of the routing processing units to implement decoupling. That is, a routing processing function is decoupled from a fault-tolerance function. In this way, when the routing processing unit corresponding to the active routing fault-tolerance unit is faulty or the active routing fault-tolerance unit is faulty, a routing processing unit may be quickly selected online from other routing processing units to establish a peer relationship with the routing node, and impact of the fault-tolerance function does not need to be considered, so that an effect of non-stop routing is better, and some other online verification work can be further performed. In addition, because the routing processing function is decoupled from the fault-tolerance function, when one routing processing unit needs to be extended, one routing processing unit and one routing fault-tolerance unit may be separately added, and impact between the routing processing units does not need to be considered, so that extensibility of the system architecture is good.

In addition, in this embodiment of this application, because the routing processing function is decoupled from the fault-tolerance function, and the routing processing units do not have an active/standby relationship, the routing processing units do not need to process logic such as active/standby data synchronization, real-time protection state demarcation, and active/standby switching. In addition, the standby database unit stores all outbound routing packets. Therefore, after a routing processing unit corresponding to a standby routing fault-tolerance unit is faulty, fault data recovery can be completed by using the packets in the standby database unit, so that system reliability is further improved.

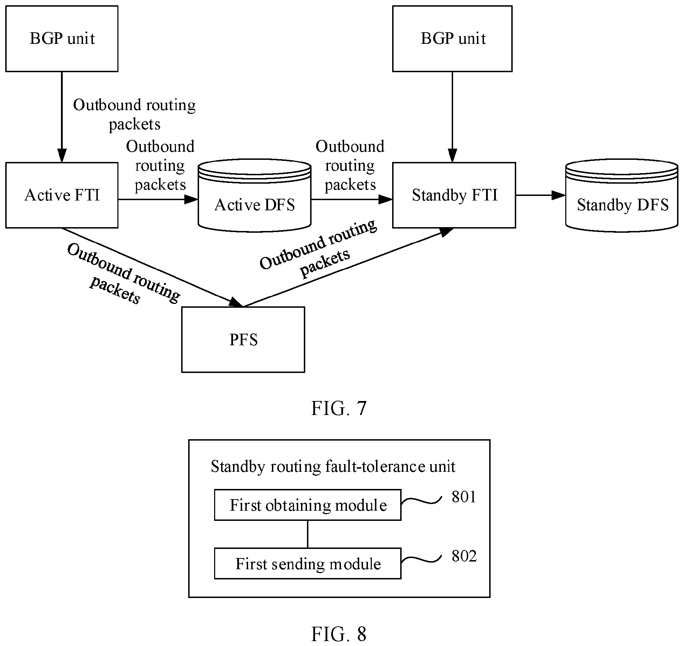

The following uses the BGP protocol as an example to describe the method for processing outbound routing packets. Refer to FIG. 7. The active FTI receives outbound routing packets from the corresponding BGP unit. The active FTI sends the outbound routing packets to a PFS, and stores the outbound routing packets in an active DFS. The active PFS receives the outbound routing packets, and sends the outbound routing packets to the routing node and at least one standby FTI that has gone online. The standby FTI obtains, by using the PFS and the active DFS, a plurality of outbound routing packets of the BGP unit corresponding to the active FTI. The standby FTI may further obtain outbound routing packets of a BGP unit corresponding to the standby FTI, further determine routing update information, and send the routing update information to another BGP unit.

It should be noted that in FIG. 7, two BGP units are used as an example for illustration, and one active FTI and one standby FTI are used as an example for illustration. Because only one PFS participates in a process of processing the outbound routing packets, FIG. 7 shows only one PFS.

The BGP protocol is used as an example. The inbound routing packets and the outbound routing packets may include but are not limited to the following packets: Open packets, keepalive (KeepAlive) packets, Update packets, RouteRefresh packets, end of record (Eor) packets, notification (Notification) packets, and capability (Capability) packets. Synchronization of a BGP peer state and a capability negotiation result is implemented between the plurality of routing processing units by using the Open packets and the KeepAlive packets. Synchronization of receiving routing data by the BGP is implemented between the plurality of routing processing units by using the BGP Update packets. Synchronization of sending routing data by the BGP is implemented between the plurality of routing processing units by using the BGP Update packets. Synchronization of BGP route refresh processes is implemented between the plurality of routing processing units by using the BGP RouteRefresh and Eor packets. Synchronization of BGP peer fault information is implemented between the plurality of routing processing units by using the BGP Notification packets. Dynamic synchronization of BGP capability state negotiation results is implemented between the plurality of routing processing units by using the BGP Capability packets.

It should be noted that the two embodiments in FIG. 4 and FIG. 6 can be combined to implement processing of the inbound routing packets and processing of the outbound routing packets. Certainly, the method for processing the inbound routing packets provided in the embodiment shown in FIG. 4 and a method for processing the outbound routing packets in a related technology can also be combined, and the method for processing the outbound routing packets provided in the embodiment shown in FIG. 6 and a method for processing the inbound routing packets in a related technology can also be combined.

FIG. 8 is a schematic diagram of a structure of a communication device according to an embodiment of this application. The communication device includes a standby routing fault-tolerance unit. Refer to FIG. 8. The standby routing fault-tolerance unit includes: a first obtaining module 801 and a first sending module 802.

The first obtaining module 801 is configured to obtain a plurality of inbound routing packets of a first routing processing unit by using a forwarding unit and an active database unit, where the first routing processing unit is a routing processing unit corresponding to an active routing fault-tolerance unit.

The first sending module 802 is configured to send the plurality of inbound routing packets of the first routing processing unit to a second routing processing unit, where the second routing processing unit is a routing processing unit corresponding to the standby routing fault-tolerance unit.

Optionally, the standby routing fault-tolerance unit further includes: a second obtaining module, a third obtaining module, a determining module, and a second sending module.

The second obtaining module is configured to obtain a plurality of outbound routing packets of the second routing processing unit.

The third obtaining module is configured to obtain a plurality of outbound routing packets of the first routing processing unit by using the forwarding unit and the active database unit.

The determining module is configured to determine routing update information based on the plurality of outbound routing packets of the second routing processing unit and the plurality of outbound routing packets of the first routing processing unit.

After the standby routing fault-tolerance unit is switched to a new active routing fault-tolerance unit, the second sending module is configured to send the routing update information to a third routing processing unit, where the third routing processing unit is a routing processing unit corresponding to a standby routing fault-tolerance unit other than the new active routing fault-tolerance unit.

Optionally, the first obtaining module is specifically configured to:
if the standby routing fault-tolerance unit is not in a real-time protection state, read the plurality of inbound routing packets of the first routing processing unit from the active database unit, where the real-time protection state is a state in which the second routing processing unit can take over work from the first routing processing unit; and
if the standby routing fault-tolerance unit is already in the real-time protection state, obtain the plurality of inbound routing packets of the first routing processing unit by using the forwarding unit.

Optionally, the standby routing fault-tolerance unit further includes a third sending module.

The third sending module is configured to send the plurality of inbound routing packets of the first routing processing unit to a standby database unit.

Optionally, the standby routing fault-tolerance unit further includes a fourth sending module.

The fourth sending module is configured to send the plurality of outbound routing packets of the first routing processing unit to a standby database unit.

Optionally, the inbound routing packet of the first routing processing unit is a border gateway protocol BGP packet, an interior gateway protocol IGP packet, or a label distribution protocol LDP packet.

In summary, in this embodiment of this application, data is synchronized in a form of the packets between the routing processing units. Because the format of the packets is standard and unified, after the data is synchronized in the form of the packets, even if data formats supported by the routing processing units are incompatible, or a routing processing unit does not have a capability of receiving and sending specific data, corresponding modification is not made on the routing processing unit, and synchronization of routing data does not fail. That is, the synchronization of the routing data in the form of the packets can ensure compatibility of supporting a plurality of data formats by the routing processing units. In addition, when an inbound routing packet carries a new attribute, the routing processing unit can receive the inbound routing packet without modification. This relatively reduces a large amount of modification work. At the same time, because the second routing processing unit can obtain routing information received by the first routing processing unit, after the routing fault-tolerance unit corresponding to the second routing processing unit is switched to the active routing fault-tolerance unit, a forwarding table in the forwarding unit remains correct, or remains correct to a large extent.

In addition, in this embodiment of this application, the routing processing units do not affect each other, only the active routing fault-tolerance unit and the standby routing fault-tolerance units affect each other and have a logic difference, and the routing fault-tolerance units do not perceive the routing processing units and do not depend on content of the routing processing units to implement decoupling. That is, a routing processing function is decoupled from a fault-tolerance function. In this way, when the routing processing unit corresponding to the active routing fault-tolerance unit is faulty or the active routing fault-tolerance unit is faulty, a routing processing unit may be quickly selected online from other routing processing units to establish a peer relationship with the routing node, and impact of the fault-tolerance function does not need to be considered, so that an effect of non-stop routing is better, and some other online verification work can be further performed. In addition, because the routing generation function is decoupled from the fault-tolerance function, when one routing processing unit needs to be extended, one routing processing unit and one routing fault-tolerance unit may be separately added, and impact between the routing processing units does not need to be considered, so that extensibility of the system architecture is good.

In addition, in this embodiment of this application, because the routing generation function is decoupled from the fault-tolerance function, and the routing processing units do not have an active/standby relationship, the routing processing units do not need to process logic such as active/standby data synchronization, real-time protection state demarcation, and active/standby switching. In addition, the database unit corresponding to the standby routing fault-tolerance unit stores all packets. Therefore, after a routing processing unit corresponding to a standby routing fault-tolerance unit is faulty, fault data recovery can be completed by using the inbound routing packets in the standby database unit, so that system reliability is further improved.

It should be noted that when the standby routing fault-tolerance unit provided in the foregoing embodiment processes the routing packets, division of the foregoing functional modules is merely used as an example for description. During actual application, the foregoing functions may be allocated to different functional modules for implementation based on a requirement, in other words, an internal structure of the standby routing fault-tolerance unit is divided into different functional modules, to complete all or some of the foregoing functions. In addition, the standby routing fault-tolerance unit provided in the foregoing embodiment belongs to a same concept as embodiments of the routing packet processing method. For a specific implementation process, refer to the method embodiments. Details are not described herein again.

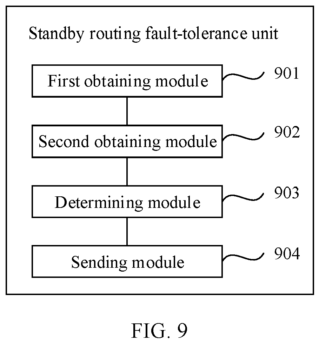

FIG. 9 is a schematic diagram of a structure of a communication device according to an embodiment of this application. The communication device includes a standby routing fault-tolerance unit. Refer to FIG. 9. The standby routing fault-tolerance unit includes: a first obtaining module 901, a second obtaining module 902, a determining module 903, and a sending module 904.

The first obtaining module 901 is configured to obtain a plurality of outbound routing packets of a second routing processing unit, where the second routing processing unit is a routing processing unit corresponding to the standby routing fault-tolerance unit.

The second obtaining module 902 is configured to obtain a plurality of outbound routing packets of a first routing processing unit by using a forwarding unit and an active database unit, where the first routing processing unit is a routing processing unit corresponding to an active routing fault-tolerance unit.

The determining module 903 is configured to determine routing update information based on the plurality of outbound routing packets of the second routing processing unit and the plurality of outbound routing packets of the first routing processing unit.

After the standby routing fault-tolerance unit is switched to a new active routing fault-tolerance unit, the sending module 904 is configured to send the routing update information to a third routing processing unit, where the third routing processing unit is a routing processing unit corresponding to a standby routing fault-tolerance unit other than the new active routing fault-tolerance unit.

In summary, in this embodiment of this application, data is synchronized in a form of the packets between the routing processing units. Because the form of the packets is standard and unified, after the data is synchronized in the form of the packets, even if data formats supported by the routing processing units are incompatible, or a routing processing unit does not have a capability of receiving and sending specific data, synchronization of routing data does not fail. That is, the synchronization of the routing data in the form of the packets can ensure compatibility of supporting a plurality of data formats by the routing processing units. In addition, when an outbound routing packet carries a new attribute, the routing processing unit can receive the outbound routing packet without modification. This relatively reduces a large amount of modification work. In addition, after obtaining routing information sent by the first routing processing unit, the second routing processing unit may further compare the routing information sent by the first routing processing unit with routing information that the second routing processing unit intends to send, to determine the routing update information. In this way, after the routing fault-tolerance unit corresponding to the second routing processing unit is switched to the active routing fault-tolerance unit, routing information that is previously released by the first routing processing unit and is incorrect for the second routing processing unit can be modified. This avoids the incorrect routing information in a network.

In addition, in this embodiment of this application, the routing processing units do not affect each other, only the active routing fault-tolerance unit and the standby routing fault-tolerance units affect each other and have a logic difference, and the routing fault-tolerance units do not perceive the routing processing units and do not depend on content of the routing processing units to implement decoupling. That is, a routing generation function is decoupled from a fault-tolerance function. In this way, when the routing processing unit corresponding to the active routing fault-tolerance unit is faulty or the active routing fault-tolerance unit is faulty, a routing processing unit may be quickly selected online from other routing processing units to establish a peer relationship with the routing node, and impact of the fault-tolerance function does not need to be considered, so that an effect of non-stop routing is better, and some other online verification work can be further performed. In addition, because the routing generation function is decoupled from the fault-tolerance function, when one routing processing unit needs to be extended, one routing processing unit and one routing fault-tolerance unit may be separately added, and impact between the routing processing units does not need to be considered, so that extensibility of the system architecture is good.

In addition, in this embodiment of this application, because the routing generation function is decoupled from the fault-tolerance function, and the routing processing units do not have an active/standby relationship, the routing processing units do not need to process logic such as active/standby data synchronization, real-time protection state demarcation, and active/standby switching. In addition, the standby database unit stores all outbound routing packets. Therefore, after a routing processing unit corresponding to a standby routing fault-tolerance unit is faulty, fault data recovery can be completed by using the packets in the standby database unit, so that system reliability is further improved.

It should be noted that when the standby routing fault-tolerance unit provided in the foregoing embodiment processes the routing packets, division of the foregoing functional modules is merely used as an example for description. During actual application, the foregoing functions may be allocated to different functional modules for implementation based on a requirement, in other words, an internal structure of the standby routing fault-tolerance unit is divided into different functional modules, to complete all or some of the foregoing functions. In addition, the standby routing fault-tolerance unit provided in the foregoing embodiment belongs to a same concept as embodiments of the routing packet processing method. For a specific implementation process, refer to the method embodiments. Details are not described herein again.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in this application may be a non-volatile storage medium, or in other words, may be a non-transitory storage medium.

It should be understood that "at least one" mentioned in this specification means one or more and "a plurality of means two or more. In descriptions of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference.

The foregoing descriptions are merely embodiments provided in this application, but are not intended to limit this application. Any modification, equivalent replacement, or improvement made without departing from the spirit and principle of this application should fall within the protection scope of this application.

## Claims

1. A routing packet processing method, comprising:
obtaining, by a standby routing fault-tolerance unit, a plurality of inbound routing packets of a first routing processing unit by using a forwarding unit and an active database unit, wherein the first routing processing unit is a routing processing unit corresponding to an active routing fault-tolerance unit; and
sending, by the standby routing fault-tolerance unit, the plurality of inbound routing packets of the first routing processing unit to a second routing processing unit, wherein the second routing processing unit is a routing processing unit corresponding to the standby routing fault-tolerance unit.

2. The method according to claim 1, wherein the method further comprises:
obtaining, by the standby routing fault-tolerance unit, a plurality of outbound routing packets of the second routing processing unit;
obtaining, by the standby routing fault-tolerance unit, a plurality of outbound routing packets of the first routing processing unit by using the forwarding unit and the active database unit;
determining, by the standby routing fault-tolerance unit, routing update information based on the plurality of outbound routing packets of the second routing processing unit and the plurality of outbound routing packets of the first routing processing unit; and
after the standby routing fault-tolerance unit is switched to a new active routing fault-tolerance unit, sending, by the new active routing fault-tolerance unit, the routing update information to a third routing processing unit, wherein the third routing processing unit is a routing processing unit corresponding to a standby routing fault-tolerance unit other than the new active routing fault-tolerance unit.

3. The method according to claim 1, wherein the obtaining, by a standby routing fault-tolerance unit, a plurality of inbound routing packets of a first routing processing unit by using a forwarding unit and an active database unit comprises:
based on the standby routing fault-tolerance unit is not in a real-time protection state, obtaining, by the standby routing fault-tolerance unit, the plurality of inbound routing packets of the first routing processing unit from the active database unit, wherein the real-time protection state is a state in which the second routing processing unit can take over work from the first routing processing unit; or
based on the standby routing fault-tolerance unit is in the real-time protection state, obtaining, by the standby routing fault-tolerance unit, the plurality of inbound routing packets of the first routing processing unit by using the forwarding unit.

4. The method according to claim 1, wherein the method further comprises:
sending, by the standby routing fault-tolerance unit, the plurality of inbound routing packets of the first routing processing unit to a standby database unit.

5. The method according to claim 2, wherein the method further comprises:
sending, by the standby routing fault-tolerance unit, the plurality of outbound routing packets of the first routing processing unit to a standby database unit.

6. The method according to any one of claims 1 to 5, wherein the inbound routing packets of the first routing processing unit are border gateway protocol BGP packets, interior gateway protocol IGP packets, or label distribution protocol LDP packets.

7. A routing packet processing method, comprising:
obtaining, by a standby routing fault-tolerance unit, a plurality of outbound routing packets of a second routing processing unit, wherein the second routing processing unit is a routing processing unit corresponding to the standby routing fault-tolerance unit;
obtaining, by the standby routing fault-tolerance unit, a plurality of outbound routing packets of a first routing processing unit by using a forwarding unit and an active database unit, wherein the first routing processing unit is a routing processing unit corresponding to an active routing fault-tolerance unit;
determining, by the standby routing fault-tolerance unit, routing update information based on the plurality of outbound routing packets of the second routing processing unit and the plurality of outbound routing packets of the first routing processing unit; and
after the standby routing fault-tolerance unit is switched to a new active routing fault-tolerance unit, sending, by the new active routing fault-tolerance unit, the routing update information to a third routing processing unit, wherein the third routing processing unit is a routing processing unit corresponding to a standby routing fault-tolerance unit other than the new active routing fault-tolerance unit.

8. A communication device, wherein the communication device comprises a standby routing fault-tolerance unit, and the standby routing fault-tolerance unit comprises: a first obtaining module and a first sending module, wherein
the first obtaining module is configured to obtain a plurality of inbound routing packets of a first routing processing unit by using a forwarding unit and an active database unit, wherein the first routing processing unit is a routing processing unit corresponding to an active routing fault-tolerance unit; and
the first sending module is configured to send the plurality of inbound routing packets of the first routing processing unit to a second routing processing unit, wherein the second routing processing unit is a routing processing unit corresponding to the standby routing fault-tolerance unit.

9. The communication device according to claim 8, wherein the standby routing fault-tolerance unit further comprises: a second obtaining module, a third obtaining module, a determining module, and a second sending module, wherein
the second obtaining module is configured to obtain a plurality of outbound routing packets of the second routing processing unit;
the third obtaining module is configured to obtain a plurality of outbound routing packets of the first routing processing unit by using the forwarding unit and the active database unit;
the determining module is configured to determine routing update information based on the plurality of outbound routing packets of the second routing processing unit and the plurality of outbound routing packets of the first routing processing unit; and
after the standby routing fault-tolerance unit is switched to a new active routing fault-tolerance unit, the second sending module is configured to send the routing update information to a third routing processing unit, wherein the third routing processing unit is a routing processing unit corresponding to a standby routing fault-tolerance unit other than the new active routing fault-tolerance unit.

10. The communication device according to claim 8, wherein the first obtaining module is specifically configured to:
based on the standby routing fault-tolerance unit is not in a real-time protection state, obtain the plurality of inbound routing packets of the first routing processing unit from the active database unit, wherein the real-time protection state is a state in which the second routing processing unit can take over work from the first routing processing unit; or
based on the standby routing fault-tolerance unit is in the real-time protection state, obtain the plurality of inbound routing packets of the first routing processing unit by using the forwarding unit.

11. The communication device according to claim 8, wherein the standby routing fault-tolerance unit further comprises a third sending module, wherein
the third sending module is configured to send the plurality of inbound routing packets of the first routing processing unit to a standby database unit.

12. The communication device according to claim 9, wherein the standby routing fault-tolerance unit further comprises a fourth sending module, wherein
the fourth sending module is configured to send the plurality of outbound routing packets of the first routing processing unit to a standby database unit.

13. The communication device according to any one of claims 8 to 12, wherein the inbound routing packets of the first routing processing unit are border gateway protocol BGP packets, interior gateway protocol IGP packets, or label distribution protocol LDP packets.

14. A communication device, wherein the communication device comprises a standby routing fault-tolerance unit, and the standby routing fault-tolerance unit comprises: a first obtaining module, a second obtaining module, a determining module, and a sending module, wherein
the first obtaining module is configured to obtain a plurality of outbound routing packets of a second routing processing unit, wherein the second routing processing unit is a routing processing unit corresponding to the standby routing fault-tolerance unit;
the second obtaining module is configured to obtain a plurality of outbound routing packets of a first routing processing unit by using a forwarding unit and an active database unit, wherein the first routing processing unit is a routing processing unit corresponding to an active routing fault-tolerance unit;
the determining module is configured to determine routing update information based on the plurality of outbound routing packets of the second routing processing unit and the plurality of outbound routing packets of the first routing processing unit; and
after the standby routing fault-tolerance unit is switched to a new active routing fault-tolerance unit, the sending module is configured to send the routing update information to a third routing processing unit, wherein the third routing processing unit is a routing processing unit corresponding to a standby routing fault-tolerance unit other than the new active routing fault-tolerance unit.

15. A communication device, comprising: a processor and a computer program, wherein when the processor executes the computer program, the communication device is enabled to implement steps in the method according to any one of claims 1 to 6 or steps in the method according to claim 7.

16. A computer-readable storage medium, storing a computer program, wherein when the computer program is executed by a computer, steps in the method according to any one of claims 1 to 6 or steps in the method according to claim 7 are implemented.

17. A computer program product, wherein the computer program product comprises instructions, and when the instructions are run on a computer, the computer is enabled to perform steps in the method according to any one of claims 1 to 6 or steps in the method according to claim 7.

18. A routing packet processing system, wherein the system comprises: a routing node and a communication device, wherein
the communication device comprises a standby routing fault-tolerance unit, and the standby routing fault-tolerance unit is configured to implement steps in the method according to any one of claims 1 to 6 or steps in the method according to claim 7.
